(19) **Europäisches Patentamt / European Patent Office / Office européen des brevets**

(11) **EP 2 223 216 B1**

(12) **FASCICULE DE BREVET EUROPEEN**

(45) Date de publication et mention
de la délivrance du brevet:
**11.10.2017 Bulletin 2017/41**

(21) Numéro de dépôt: **08859188.8**

(22) Date de dépôt: **09.12.2008**

(51) Int Cl.:
***G06F 11/10*** *(2006.01)*

(86) Numéro de dépôt international:
**PCT/EP2008/067078**

(87) Numéro de publication internationale:
**WO 2009/074556 (18.06.2009 Gazette 2009/25)**

(54) **DISPOSITIF DE SERVICE DE FIABILITE, SYSTEME ET PROCEDE ELECTRONIQUES METTANT EN OEUVRE AU MOINS UN TEL DISPOSITIF ET PRODUIT DE PROGRAMME INFORMATIQUE PERMETTANT DE METTRE EN  UVRE UN TEL PROCEDE**

GERÄT FÜR ZUVERLÄSSIGKEITSDIENST, ELEKTRONISCHES SYSTEM UND VERFAHREN ZUR IMPLEMENTIERUNG VON MINDESTENS EINEM DERARTIGEN GERÄT UND COMPUTERPROGRAMMPRODUKT ZUR IMPLEMENTIERUNG EINES DERARTIGEN VERFAHRENS

RELIABILITY SERVICE DEVICE, ELECTRONIC SYSTEM AND METHOD IMPLEMENTING AT LEAST ONE SUCH DEVICE AND COMPUTER PROGRAM PRODUCT MAKING IT POSSIBLE TO IMPLEMENT SUCH A METHOD

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **11.12.2007 FR 0759721**

(43) Date de publication de la demande:
**01.09.2010 Bulletin 2010/35**

(73) Titulaire: **Commissariat à l'Énergie Atomique et aux Énergies Alternatives
75015 Paris (FR)**

(72) Inventeur: **GHERMAN, Valentin
F-91300 Massy (FR)**

(74) Mandataire: **Ilgart, Jean-Christophe et al
BREVALEX
95, rue d'Amsterdam
75378 Paris Cedex 8 (FR)**

(56) Documents cités:
**WO-A-02/01364          US-A1- 2002 124 143
US-A1- 2002 199 151     US-B1- 6 321 359
US-B1- 6 507 928**

EP 2 223 216 B1

**Description**

Domaine de l'invention

La présente invention concerne un dispositif de service de fiabilité, un système et un procédé électroniques mettant en oeuvre au moins un tel dispositif et un produit de programme informatique permettant de mettre en oeuvre un tel procédé.

La présente invention peut trouver de nombreuses applications, notamment dans les domaines des systèmes embarqués dans le domaine de l'industrie automobile, le nucléaire, le service sanitaire, l'aviation, l'espace, le militaire mais aussi dans le domaine des serveurs de fichiers ou de bases de données.

Présentation générale de l'art antérieur

Comme prévu par la loi de Moore, le progrès technologique dans le domaine microélectrique assure une augmentation continue de la finesse de gravure et implicitement de la miniaturisation des circuits intégrés. Plus ses composants sont rapprochés, plus un microprocesseur travaille vite, et plus il possède de circuits électroniques, plus sa puissance est élevée. Les bénéfices économiques apportés par une miniaturisation plus élevée sont l'augmentation de la performance et/ou de la fonctionnalité, accompagnée par une baisse de la consommation par fonction.

Les inconvénients connus des très hauts niveaux de miniaturisation sont la réduction extrême de la quantité de charge électrique nécessaire pour la représentation des niveaux logiques, l'amplification du couplage électromagnétique entre signaux adjacents, la diminution des marges de bruit, etc. De ce fait, des erreurs transitoires qui sont induites par des oscillations de la tension d'alimentation, par la diaphonie et par l'irradiation (cosmique ou terrestre) deviennent de plus en plus nombreuses. Contrairement à des erreurs permanentes, qui sont causées par des défauts physiques et ainsi peuvent être identifiées pendant un test de production, les erreurs transitoires peuvent être corrigées, mais elles constituent une menace permanente durant toute la vie d'un système microélectronique.

Les mémoires RAM et les interconnections sur les puces électroniques appartiennent aux composants microélectroniques les plus vulnérables aux erreurs transitoires. Par exemple, des mesures sur des microprocesseurs ALPHA (marque déposé) vendus par la société DEC ont indiqué une augmentation importante du taux d'erreurs transitoires dans les cellules d'une mémoire cache, au fur et à mesure que le niveau de finesse de gravure passe de $0,35 \mu m$ à $0,18 \mu m$.

Habituellement, les microcontrôleurs des systèmes de sécurité sont développés pour garantir un seul niveau de protection défini par le nombre d'erreurs détectées et corrigées. L'utilisation de tels microcontrôleurs pour la réalisation d'un environnement sécurisé devant exécuter des tâches avec différents niveaux de protection est très chère. Par conséquent, les microcontrôleurs des systèmes de sécurité futurs devront être capables de fournir plusieurs niveaux de protection.

On va, à présent, considérer quelques exemples de méthodes pour augmenter la fiabilité des systèmes microélectroniques selon l'art antérieur, qui ont l'inconvénient de n'être pas suffisamment flexibles et/ou trop couteux en termes d'effort d'intégration et/ou de matériel utilisé.

Dans la suite, une méthode de protection est considérée au « niveau sous-système » si elle peut garantir l'intégrité désirée des données venant du sous-système protégé. Par contre, une méthode de protection est au « niveau système » si la vérification des données est effectuée à l'extérieur du sous-système protégé.

Au niveau sous-système, la meilleure manière de protéger les sous-systèmes de stockage et d'interconnexion contre les erreurs transitoires et permanentes est d'utiliser des codes de détection ou correction d'erreurs comme décrit dans les documents référencés [1] et [2] en fin de description.

Des solutions utilisant un système de calcul « ad hoc » fiable sont décrites dans le document [3]. La solution proposée pour le sous-système mémoire vise en premier lieu à minimiser le surcoût de l'information redondante (bits de vérification), en fournissant un partitionnement flexible de l'espace d'adressage, en zones protégées avec différents codes de détection ou correction d'erreurs. Ce système présente de nombreux inconvénients :

- Le mécanisme utilisé pour effectuer en ligne le partitionnement de l'espace d'adressage se base sur des solutions d'architecture « ad-hoc », qui ne sont pas utilisables facilement dans d'autres systèmes de calcul.
- Il est nécessaire d'utiliser au moins deux modules de mémoire ou un module mémoire avec deux ports, un pour les bits d'information utile (données) et un pour les bits de vérification.
- Le matériel utilisé pour recevoir les bits de vérification ne peut pas stocker les bits de données. L'utilisation optimale de la capacité de stockage peut seulement être atteinte pour un seul partitionnement de l'espace d'adressage.
- Ce mécanisme ne peut pas être étendu naturellement pour assurer en parallèle la protection des sous-systèmes d'interconnexion, des mémoires cache ou des mémoires non-volatiles (disque, flash).

Le document référencé [4] propose une solution pour la protection d'un sous-système mémoire a double vitesse d'accès (DDR) en utilisant des codes de correction d'erreurs (ECC). Ce procédé a l'inconvénient de n'apporter aucune flexibilité en ce qui concerne le type de codage utilisé et le partitionnement de l'espace d'adressage.

Même dans le cas de mémoires protégées par des codes ECC, des données peuvent être irrémédiablement perdues, lorsque plusieurs bits adjacents dans la mémoire sont erronés (erreur multiple) ou quand il y a une défaillance d'une puce entière dans le sous-système mémoire.

Une solution contre les erreurs multiples peut être la combinaison des méthodes de correction/détection « horizontales » et « verticales », comme, la combinaison des codes ECC pour la protection des lignes de mémoire et des capteurs de courant pour la détection des erreurs transitoires à travers les colonnes de mémoire. La solution la moins chère contre les erreurs multiples est l'imbrication de bits, selon laquelle des bits placés physiquement l'un près de l'autre sont distribués à différents mots de mémoires, qui sont protégés par des codes ECC.

Une solution appelée « chipkill » d'IBM fournit une protection contre les erreurs multiples et la défaillance d'une puce entière de mémoire en connectant les entrées et les sorties des puces de telle manière que les bits entrants/sortants d'une puce de mémoire sont utilisés dans des mots de code ECC différents.

Un inconvénient de toutes les méthodes de l'art connu au niveau sous-système est que l'on ne peut pas accéder à l'information redondante (bits de vérification) depuis l'extérieur du sous-système. Toutes ces méthodes de protection exigent des modules de mémoire et d'interconnexion modifiés et implicitement plus chers. De plus, ces prix sont très sensibles au degré de flexibilité fourni.

Une solution de l'art connu au niveau système consiste à coupler deux sous-systèmes de calcul et de stockage en « lock-step ». C'est-à-dire, on utilise deux sous-systèmes équivalents pour exécuter les mêmes tâches. Les deux sous-systèmes reçoivent les mêmes entrées et, en cas d'opération normale, ils fournissent les mêmes résultats. On utilise un comparateur pour comparer les sorties des deux sous-systèmes. Quand il y a une défaillance dans un des deux sous-systèmes, le comparateur indique qu'il y a une erreur. Cependant, on ne sait pas où l'erreur est localisée. Un tel procédé ne sert qu'à détecter une défaillance sans pouvoir la corriger et a aussi l'inconvénient de doubler le coût du matériel utilisé. De plus, s'il y a la même défaillance dans les deux sous-systèmes, le comparateur est incapable de la détecter. Une autre solution consiste à utiliser trois sous-systèmes équivalents, auxquels on fournit les mêmes entrées. On utilise alors un « voteur » à la sortie des trois sous-systèmes pour masquer la défaillance d'un des sous-systèmes. Si les résultats produits par les trois sous-systèmes sont identiques, le « voteur » suppose qu'ils fonctionnent correctement. Si un des résultats diffère des deux autres, le « voteur » vote pour le résultat majoritaire qui est considéré comme le résultat correct. Un homme du métier comprend qu'un tel procédé est très onéreux. Un homme du métier comprend aussi qu'on peut rajouter encore des sous-systèmes équivalents pour améliorer la fiabilité, mais que cela entraine des dépenses.

Le document référencé [5] décrit une solution différente qui assure la détection des erreurs dans le système entier au prix d'étendre le logiciel avec des informations spécifiques et d'un système ad-hoc. Le document US 2002/0199151 A1 décrit un dispositif tel que spécifié au préambule de la revendication indépendante 1. Pour pallier les problèmes de coût et de flexibilité des procédés de l'art connu, l'invention propose une approche système pour protéger des données, ne nécessitant pas la modification ou la restriction du nombre de modules mémoire, et permettant un partitionnement flexible et en ligne de l'espace d'adressage en différentes zones de protection.

L'invention a pour objet de proposer une solution au niveau système pour garantir la protection des sous-systèmes d'interconnexion et de stockage de données contre les erreurs transitoires et permanentes de manière à réduire le prix et augmenter la flexibilité des systèmes de sécurité futurs.

Exposé de l'invention

L'invention concerne un dispositif électronique tel que défini dans la revendication indépendante 1. Avantageusement on associe l'adresse de mots d'information utile avec l'adresse contenant les bits de vérification correspondants selon l'équation suivants :

$$@\text{check\_word} = \mathit{OffSet} \lor \{[\mathit{Mask} \land \text{data\_word}] \gg \log_2 \mathrm{C}\}$$

dans laquelle,

    *OffSet* et *Masque* sont des paramètres stockés dans un registre d'état,
    $\lor$ représente l'opération logique « ou »,
    $\land$ représente l'opération logique « et »,
    $\gg$ x représente un décalage de données de x bits vers la droite, et
    *C* est le nombre de mots avec des bits d'information utile qui correspondent à un mot contenant des bits de vérification pour le code de détection/correction choisi.

Dans un mode de réalisation avantageux le dispositif de service de fiabilité comprend un registre d'état, un registre de mémoire cache, un registre d'étiquette et quatre registres additionnels, le second registre additionnel étant connecté à un troisième multiplexeur, au registre d'étiquette et à un module de vérification, le registre d'étiquette étant connecté au troisième multiplexeur, au module de vérification et à un quatrième multiplexeur, le premier registre additionnel étant connecté au module maître et à un second multiplexeur, le module maître étant connecté au registre d'état, un module de calcul étant connecté au troisième multiplexeur, au quatrième multiplexeur et au registre d'état, le quatrième multiplexeur étant connecté à la mémoire, le quatrième registre additionnel étant connecté à la mémoire, à un premier module de correction et au second multiplexeur, le premier module de correction étant connecté au module maître et au troisième registre additionnel, un module de calcul étant connecté au second multiplexeur, au registre de la mémoire cache et à un module de comparaison, le module de comparaison étant connecté au registre de la mémoire cache, au premier module de correction et à un second module de correction, le second module de correction étant connecté au registre de la mémoire cache, le registre de la mémoire cache étant connecté à la mémoire et au premier multiplexeur, le premier multiplexeur étant connecté au troisième registre additionnel et à la mémoire.

L'invention concerne aussi un système informatique comprenant au moins un dispositif de service de fiabilité, au moins un module maître sur le sous-système d'interconnexion et au moins un module esclave sur le sous-système d'interconnexion.

Selon une variante de l'invention, le système comprend au moins deux modules maitres et un module arbitre.

Selon une autre variante de l'invention le dispositif de service de fiabilité est connecté à un module arbitre sur le sous-système d'interconnexion.

Selon encore une variante de l'invention le dispositif de service de fiabilité est connecté à un module maître sur le sous-système d'interconnexion.

Selon encore une variante de l'invention le dispositif de service de fiabilité est connecté à une unité de gestion mémoire.

Selon une autre variante le dispositif de service de fiabilité est connecté à un module maître et à une unité de gestion mémoire.

Selon encore une variante le dispositif de service de fiabilité est connecté à un module maître et à une mémoire cache pour les bits d'information utile et à une seconde mémoire cache pour les bits de vérification de manière à ce que le dispositif de service de fiabilité ait un accès parallèle aux bits d'information utile et aux bits de vérification.

Selon une autre variante le module maître est un microprocesseur, une mémoire cache, un DMA, ou une passerelle de bus.

L'invention concerne également un procédé électronique tel que défini dans la revendication 12 mettant en oeuvre le dispositif de la revendication indépendante 1. Ce procédé comprend également les étapes suivantes :

A) une étape de vérification par un dispositif de service de fiabilité de la nécessité d'une protection des accès,
B) une étape de contournement du dispositif de service de fiabilité, si cette protection n'est pas nécessaire,
C) une étape de stockage dans une mémoire et une étape de vérification par le dispositif de service de fiabilité de la présence dans la mémoire cache du dispositif de service de fiabilité des bits de vérification correspondant à l'information utile transférée,
K) une étape de contrôle par le dispositif de service de fiabilité de la modification et, si nécessaire, de la sauvegarde dans la mémoire des bits modifiés présents dans la mémoire cache du dispositif de service de fiabilité, quand le dispositif de service de fiabilité perçoit que les bits de vérification correspondant à l'information utile transférée ne sont pas présents dans sa mémoire cache.

Avantageusement, ce procédé permet de diminuer le coût en utilisant des dispositifs de stockage et d'interconnexion standard. Ce procédé permet également d'augmenter la flexibilité des systèmes de calculs fiables en supportant plusieurs niveaux et zones de protection dans l'espace d'adressage.

Selon une variante du procédé les données sont chargées/stockées après l'étape (A) et avant l'étape (C) .

Avantageusement le procédé comprend, en outre, les étapes suivantes :

- avant l'étape (K) :

D) Une étape de création par le dispositif de service de fiabilité (RSM) de nouveaux bits de vérification, et de comparaison de ces bits avec les bits déjà présents dans la mémoire cache du dispositif de service de fiabilité, suivie d'une étape d'exécution par le dispositif de service de fiabilité d'opérations de détection/correction d'erreurs,
E) Une étape de contrôle par le dispositif de service de fiabilité de la correction des données utiles,

F) Une étape de terminaison de la transaction de la mémoire quand les données utiles n'ont pas été corrigées,

G) Une étape de sauvegarde dans la mémoire, suivie d'une étape de terminaison de la transaction de la mémoire, quand les bits d'information utile ont été corrigés,

H) Une étape de contrôle par le dispositif de service de fiabilité de l'existence d'une nouvelle transaction de mémoire et de la modification du contenu de la mémoire cache du dispositif de service de fiabilité,

I) Une étape d'attente d'une nouvelle transaction par le dispositif de service de fiabilité, quand le contenu de la mémoire cache n'a pas été modifié,

J) Une étape de stockage des bits de vérification modifiés dans la mémoire, suivie d'une étape d'attente d'une nouvelle transaction par le dispositif de service de fiabilité.

- après l'étape (K) :

L) une étape de stockage des bits de vérification modifiés dans la mémoire, suivie d'une étape de chargement des bits de vérification nécessaire depuis la mémoire, et suivie de l'étape (D).

Selon une autre variante le stockage dans la mémoire des bits modifiés qui est effectué pendant les étapes (G) et (J) n'est pas réalisé en mode lecture.

Selon une autre variante du procédé les données sont chargées/stockées après l'étape (C) et avant l'étape (D).

L'invention concerne aussi un produit de programme informatique lisible par microprocesseur comprenant des moyens formant un code de programme informatique pour mettre en oeuvre le procédé selon l'invention.

L'invention propose un procédé entièrement nouveau pour protéger des données, qui ne nécessite pas un nombre spécifique de modules mémoire. En plus, ce procédé fournit un support pour réaliser un partitionnement en ligne simple et flexible de l'espace d'adressage en différentes zones de protections.

Des bits de données ou des bits de vérification peuvent être stockés à n'importe quelle adresse mémoire et on peut accéder à ces bits de l'extérieur du sous-système mémoire. Une telle caractéristique est essentielle pour une extension naturelle vers une protection des sous-systèmes d'interconnexion, des mémoires cache et non-volatile (disque ou flash). En utilisant le procédé de l'invention seulement sur une mémoire cache, on obtient implicitement une protection des applications critiques contre les erreurs, qui apparaissent dans les interconnexions et les sous-systèmes de stockage, auxquelles on accède dans le cas d'un défaut de mémoire cache (« cache miss »). On vérifie chaque mot seulement quand on accède à la mémoire cache et aucune vérification supplémentaire exécutée par les sous-systèmes d'interconnexion et de stockage n'est nécessaire.

Le matériel utilisé pour stocker les bits de vérification peut être utilisé pour stocker des données dans le cas d'une application pour laquelle la sécurité n'est pas critique. Ceci n'est pas le cas avec les sous-systèmes de mémoire fiables de l'art connu.

Pendant un accès à la mémoire, le procédé de l'invention peut nécessiter un accès mémoire supplémentaire pour les bits de vérification. Le nombre supplémentaire d'accès mémoire et implicitement l'impact sur la performance est en grande partie diminué en exploitant les accès de mémoire en mode salve d'accès, aussi appelé mode « burst », dont on en a par exemple besoin pour compléter une ligne cache dans le cas d'un défaut de mémoire cache (« cache miss »).

Dans le but de réduire les surcoûts de stockage et d'exécution, on peut comprimer les bits de vérification correspondant à des données stockées dans des emplacements de mémoire, qui sont consécutifs et correctement alignés, dans un seul mot de mémoire. Par exemple, un mot de 32 bits peut recevoir les bits de vérification correspondant à 32 ou 4 mots de données protégés avec des codes de parité respectivement avec des codes ECC. Dans le cas de mots de 64 bits, le nombre de mots de données, qui correspond à un mot de vérification, est doublé. Si un emplacement de mémoire contient des bits de vérification représentant des données stockées dans $2^n$ emplacements consécutifs et correctement alignés, un accès de type salve d'accès (« burst ») sur $2^n$ adresses consécutives et correctement alignés a besoin au plus d'un accès supplémentaire pour les bits de vérification.

L'invention présente les caractéristiques avantageuses suivantes :

- Programmabilité : Les domaines d'espace d'adressage et leurs niveaux de protection peuvent être réglés par le logiciel.
- Flexibilité : Les limites et les niveaux de protection des domaines nommés peuvent être modifiés en ligne,
- Non-intrusivité : Le procédé de l'invention peut être réalisé à l'aide du dispositif RSM selon l'invention connecté au système. Aucun des sous-systèmes protégés ne doit être modifié. En plus, on n'a pas besoin de modifier ou augmenter les logiciels utilisés.
- Indépendance de technologie : Le procédé de l'invention est entièrement indépendant de la technologie de mise en oeuvre des sous-systèmes de stockage (cache, volatile, non-volatile) et des sous-systèmes d'interconnexion (bus, grille, réseau sur puce).

- Transparence : Dans le cas où on n'a besoin d'aucune protection pour une certaine tâche ou un processus logiciel spécifique, le flot de données contourne le dispositif RSM selon l'invention.
- Faible coût : Les composants de la mémoire protégée et les interconnexions entre ceux-ci peuvent être construits en utilisant des modules standard, simples et bon marché, dépourvus des mécanismes intrinsèques de correction/détection d'erreurs. Seulement dans le cas de niveaux de protection basé sur de codes ECC, il est recommandé d'utiliser les sous-systèmes d'interconnexion fournissant des mécanismes de détection pour les erreurs d'adressage. De plus, étant donné que le procédé de l'invention est non-intrusif, il est simple d'intégrer ce procédé dans un système de calcul.
- Dégradation limitée ou nulle de la performance : Comme le procédé selon l'invention est utilisé au niveau du système, une seule vérification de données, et non une vérification dans chacun des sous-systèmes protégés, est nécessaire.

Le procédé selon l'invention a l'avantage, par rapport aux documents de l'art antérieur, d'être plus flexible, plus facile à dimensionner (« scalability »), plus adaptable aux différentes architectures, plus intéressant au niveau des prix des composants et pour l'adaptation du système du client.

Présentation des figures

D'autres caractéristiques, buts et avantages de la présente invention ressortent encore de la description qui suit, laquelle est purement illustrative et non limitative et doit être lue en regard des figures annexées qui illustrent des modes de réalisation du procédé selon l'invention.

La figure 1 montre l'architecture d'un dispositif de service de fiabilité (« reliability service module ») ou RSM selon l'invention.
La figure 2 montre un premier mode de réalisation du système selon l'invention utilisant le dispositif RSM.
La figure 3 montre un organigramme illustrant schématiquement un premier procédé selon l'invention exécuté par le dispositif RSM selon l'invention intégré dans le système selon la figure 2.
La figure 4 montre un second mode de réalisation du système selon l'invention utilisant le dispositif RSM.
La figure 5 montre un organigramme illustrant schématiquement un second procédé selon l'invention exécuté par le dispositif RSM selon l'invention intégré dans le système selon la figure 4.
La figure 6 montre un troisième mode de réalisation du système selon l'invention utilisant le dispositif RSM.
La figure 7 montre un quatrième mode de réalisation du système selon l'invention utilisant le dispositif RSM.
La figure 8 montre un cinquième mode de réalisation du système selon l'invention utilisant le dispositif RSM.

Description de l'invention

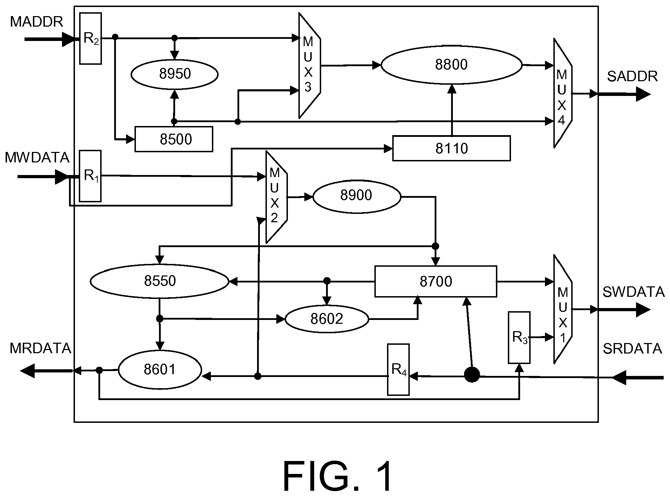

La figure 1 illustre la configuration d'un dispositif RSM (« reliability service module ») selon l'invention. Ce dispositif RSM comprend un registre d'état 8110, un registre de cache 8700 qui est employé comme mémoire cache du dispositif RSM pour les bits de vérifications, un registre 8500 utilisé comme étiquette pour le registre de cache 8700 et quatre registres additionnels R1, R2, R3 et R4. Le second registre additionnel R2 permet de recevoir des adresses mémoire MADDR envoyées par le module maître et de les fournir à un troisième multiplexeur MUX3, au registre d'étiquette 8500 et à un module de vérification 8950. Le module de vérification 8950 est utilisé pour vérifier si l'adresse stockée dans le registre R2 et l'adresse stockée dans le registre d'étiquette 8500 correspondent à des données ayant leur bits de vérification dans le même mot mémoire. Le registre de cache 8700 contient donc les bits de vérification correspondant à l'adresse stockée dans le registre d'étiquette. Le registre d'étiquette 8500 permet de fournir des adresses au module de vérification 8950, au troisième multiplexeur MUX3 et à un quatrième multiplexeur MUX4. Le premier registre additionnel R1 permet de recevoir une donnée MWDATA envoyée par le module maître en mode d'écriture et ensuite de fournir cette donnée à un second multiplexeur MUX2 et au registre d'état 8110. Un module de calcul 8800 est utilisé pour calculer l'adresse des bits de vérification qui correspondent à la donnée dont l'adresse est fournit par le troisième multiplexeur MUX3. Ce calcul est réalisé en utilisant des paramètres qui sont stockées dans le registre d'état 8110. Le résultat du module de calcul 8800 est ensuite fourni au quatrième multiplexeur MUX4. Le quatrième multiplexeur MUX4 permet de multiplexer les adresses fournies par le registre d'étiquette 8500 et par le module de calcul 8800 et de générer une adresse SADDR pour la mémoire (toujours vue comme esclave sur le sous-système d'interconnexion). Le quatrième registre additionnel R4 et le registre de cache 8700 permettent de recevoir des données SRDATA reçues des mémoires en mode de lecture.

Le quatrième registre additionnel R4 permet de fournir des données à un premier module de correction 8601 et au multiplexeur MUX2. Le premier module de correction 8601 permet de fournir des données corrigées MRDATA au module maître. Le multiplexeur MUX2 permet de multiplexer les données MWDATA reçues du module maître et les données SRDATA reçues de la mémoire. Un module de calcul 8900 est utilisé pour calculer les bits de vérification correspondant à la donnée sortant du multiplexeur MUX2.

Le module de calcul 8900 permet de fournir son résultat au registre de cache 8700 et à un module de comparaison 8550 qui permet de comparer ce résultat avec les bits de vérification préalablement stockés dans le registre du cache 8700. Le module de comparaison 8550 permet de recevoir des données du module de calcul 8900 et du registre du cache 8700 et fournir le résultat au premier module de correction 8601 et à un second module de correction 8602. Le second module de correction 8602 fournit son résultat au registre du cache 8700. Le second module de correction 8602 est utilisé pour corriger les bits de vérification stockés dans le registre du cache 8700. Le registre du cache 8700 permet de délivrer le résultat du calcul au module de comparaison 8550, au second module de correction 8602 et au premier multiplexeur MUX1. Le multiplexeur MUX1 permet de multiplexer les bits de vérification reçus du registre du cache 8700 avec les données reçues du troisième registre additionnel R3, et ensuite d'envoyer le résultat SWDATA vers la mémoire.

La fonction du dispositif RSM selon l'invention est de garantir l'intégrité des données envoyées par les mémoires de travail (i.e mémoires caches et/ou principales) aux unités de traitement.

Une caractéristique essentielle de ce dispositif RSM consiste en ce que les bits de vérification sont adressés et stockés de la même manière que les bits de données. Ceci peut engendrer des accès mémoires supplémentaires pour ramener/amener les bits de vérification par rapport à une approche classique où le mécanisme de vérification est embarqué dans la mémoire protégée. Les bits de vérification peuvent être ainsi échangés entre la mémoire protégée et les supports de stockage non-volatile, comme des bandes magnétiques, des mémoires flash ou des disques optiques. De cette manière, on bénéficie d'une protection implicite contre des erreurs, qui peuvent apparaître également dans les supports de stockage non-volatile.

Toutes les méthodes basées sur l'usage d'un dispositif RSM peuvent être utilisés pour augmenter le rendement de production de la même manière qu'elles sont utilisées pour améliorer la fiabilité.

L'information décrivant le type de code de détection/correction d'erreurs associé à chaque zone de protection dans la mémoire peut être étendue par la prise en compte des droits d'accès à la mémoire. Pour chaque zone de protection seulement deux bits sont nécessaires. Un bit permet l'accès en lecture de la mémoire et l'autre bit pour l'accès en écriture de la mémoire. Cette extension permet l'utilisation du dispositif RSM de l'invention comme unité de protection mémoire (MPU : « Memory Protection Unit »).

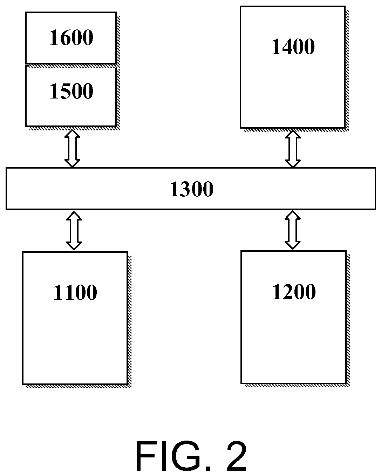

La figure 2 montre un premier mode de réalisation du système de l'invention utilisant le dispositif RSM 1500 selon l'invention. Ce dispositif RSM 1500 assure différents niveaux de protection d'un sous-système d'interconnexion et de stockage. Ce dispositif RSM a comme fonction de surveiller tous les accès et de contrôler si une des conditions choisies est satisfaite. Si une des conditions choisies est satisfaite, la protection associée à cette condition est assurée.

Le dispositif RSM 1500 est directement connecté à un sous-système de d'interconnexion 1300 qui assure la liaison entre un module maître (microprocesseur, DMA) et des modules esclaves (les mémoires auxiliaires) 1100, 1200.

Les mémoires auxiliaires 1100, 1200 connectées au sous-système d'interconnexion sont représentées par une espace mémoire, avec laquelle elles sont associées. Le système de l'invention utilisant le dispositif RSM peut protéger des données stockées dans l'espace d'adressage mémoire indépendamment du support de stockage (interne ou externe).

Dans le cas d'un sous-système d'interconnexion basé sur un bus, on peut accéder uniquement de manière séquentielle à l'espace mémoire comprenant les bits de vérification correspondant aux mots de données manipulés. On exploite au maximum des accès de type salves d'accès (« burst ») dans le but de diminuer l'impact sur la performance. Cette réduction est obtenue en groupant les bits de vérification appartenant aux mots des données d'une même salve d'accès dans un seul mot mémoire. Ces bits de vérification peuvent être stockés dans une mémoire cache au niveau du dispositif RSM, qui comprend un ou plusieurs registres. Chaque registre est pourvu d'une étiquette qui contient l'adresse d'une des données dont les bits de vérification sont présent dans le registre associé et d'un bit modifié (« dirty »), c'est-à-dire un bit, qui indique si le contenu du registre a été modifié mais pas encore sauvegardé.

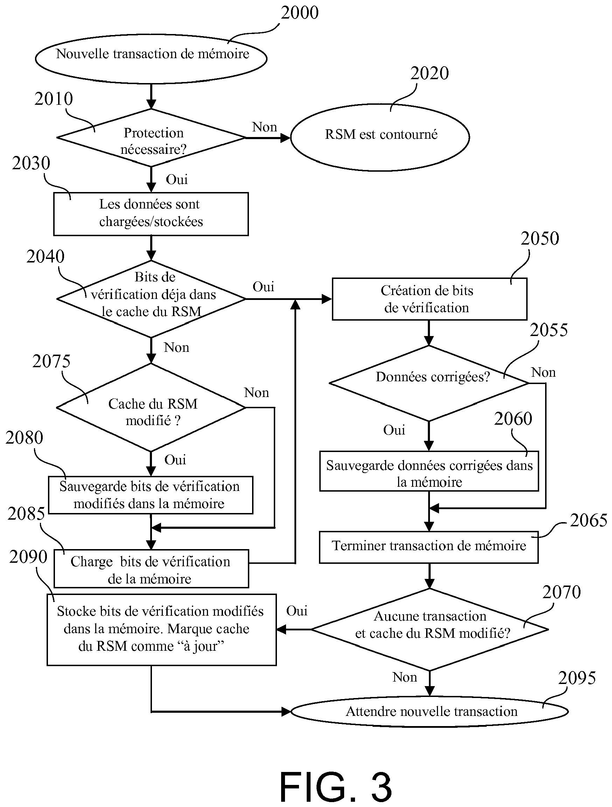

La figure 3 montre un organigramme illustrant schématiquement une première variante du procédé selon l'invention mettant en oeuvre un dispositif RSM selon la figure 1 et un système comprenant un dispositif RSM selon la figure 2.

Dans une étape 2000, une nouvelle transaction de mémoire commence. Dans une étape 2010, le dispositif RSM 1500 vérifie si une protection des accès est nécessaire. Si une protection n'est pas nécessaire, le dispositif RSM 1500 est contourné et on passe à une étape 2020. Si une protection est nécessaire, on passe à une étape 2030, dans laquelle des données sont chargées/stockées de/dans une mémoire 1100, 1200. Ici, ce sont des mémoires principales qui sont adressées. On peut protéger des opérations lire/écrire sur des mémoires RAM, et des opérations de lecture sur des mémoires ROM. Ensuite le dispositif RSM 1500 vérifie dans une étape 2040, si les bits de vérification correspondant aux données transférées existent déjà dans la mémoire cache du dispositif RSM. Si ces bits de vérification sont déjà présent dans la mémoire cache du dispositif RSM 1500, on passe à une étape 2050, dans laquelle le dispositif RSM 1500 génère de nouveau les bits de vérification, correspondant aux données transférées et compare ensuite ces bits de vérification avec ceux présents dans la mémoire cache du dispositif RSM 1500. En se fiant à cette vérification, le dispositif RSM 1500 exécute des opérations de détection/correction d'erreurs, en tenant compte du type de code. Dans le cas d'une décision négative de l'étape 2040, on passe à une étape 2075, dans laquelle le dispositif RSM contrôle si les bits de vérification de la mémoire cache du dispositif RSM 1500 ont été modifiés, mais pas sauvegardés dans la mémoire. Si tel est le cas, la mémoire cache du dispositif RSM est dite « modifiée ». Si la mémoire cache du dispositif RSM n'est pas modifiée, on passe à une étape 2085. Si la mémoire cache du dispositif RSM est modifiée, on passe à une étape 2080, dans laquelle les bits de vérification modifiés sont stockés dans la mémoire 1100, 1200. Ensuite, on passe à l'étape 2085, dans laquelle, les bits de vérification nécessaires sont chargés depuis la mémoire 1100, 1200. Ensuite, on passe à l'étape 2050 décrite ci-dessus. Par la suite, on passe à une étape de décision 2055, dans laquelle le dispositif RSM contrôle si les données ont été corrigées. Si les données n'ont pas été corrigées, on passe à une étape 2065. Si les données ont été corrigées, on passe à une étape 2060, dans laquelle les données corrigées sont sauvegardées dans la mémoire 1100, 1200. Après, on passe à l'étape 2065, dans laquelle la transaction de mémoire est terminée. On passe ensuite à une étape de décision 2070, dans laquelle le dispositif RSM contrôle s'il y une nouvelle transaction de mémoire et si la mémoire cache du dispositif RSM 1500 est modifiée. Si la réponse est non, on passe à une étape 2095, autrement, on passe à une étape 2090, dans laquelle le dispositif RSM stocke les bits de vérification modifiés dans la mémoire 1100, 1200. L'adresse des bits de vérification contenus dans un des registres de la mémoire cache du dispositif RSM est obtenue à partir de l'étiquette associée à ce registre selon la description ci-dessous. La mémoire cache du dispositif RSM est marquée comme à jour, c'est à dire que tous les bits de vérification qu'il contient ont déjà été sauvegardés dans la mémoire. Dans ce cas, lors d'une nouvelle transaction mémoire demandant de nouveaux bits de vérification, il n'est pas nécessaire de stocker le contenu à jour de la mémoire cache du dispositif RSM avant le chargement de nouveaux bits de vérification. Ces bits de vérification peuvent être chargés et écrits sur les bits de vérification précédents. Ensuite, on passe à une étape 2095, dans laquelle le dispositif RSM 1500 entre dans un état d'attente, pendant laquelle le dispositif RSM 1500 attend une nouvelle transaction de mémoire ayant besoin de protection.

Le dispositif RSM 1500 du système selon la figure 2 entre dans un état de repos pendant lequel aucune transaction de mémoire n'est demandée par le module maître 1400 sur le bus 1300. Dans le but de réduire les redondances dans les futures transactions de mémoire, le dispositif RSM 1500 contrôle sa mémoire cache et les emplacements contenant des bits de vérification modifiés sont sauvegardés dans la mémoire 1100, 1200 avant que le dispositif RSM 1500 entre dans l'état de repos. Dans ce mode de réalisation, chaque étiquette de cache contient l'adresse de mémoire d'une des données avec les bits de vérification présents dans l'emplacement cache qui lui correspond. Chaque fois que l'on doit stocker dans la mémoire 1100, 1200 un emplacement de mémoire cache modifié, l'adresse de données présente dans l'étiquette de l'emplacement cache correspondant est transformée en une adresse de bits de vérification, selon la description ci-dessous.

L'adresse de l'emplacement mémoire, qui contient les bits de vérification (@check_word) correspondant à un mot de donnée situé à l'adresse @data_word, est calculée avec l'équation suivante:

$$@\text{check\_word} = \textit{OffSet} \vee \{[\textit{Mask} \wedge \text{data\_word}] >> \log_2 \text{C}\} \qquad (1)$$

où OffSet et Masque sont des paramètres stockés dans un registre d'état, tandis que le symbole '$\vee$' représente l'opération logique « ou », et le symbole '$\wedge$' représente l'opération logique « et ». Le symbole '>> x' représente un décalage de données de x bits vers la droite, et 'C' est le nombre de mots de données qui correspondent à un mot de vérification pour un code de détection/correction choisi.

Un code a besoin de 7 bits de vérification pour permettre la correction d'une erreur simple et la détection d'une erreur double (SEC-DED) dans des données comprenant 32 bits, et de 8 bits de vérification pour les mots de données comprenant 64 bits. Dans le cas des architectures 32 bits, le code SEC-DED est étendu à 8 bits de vérification dans le but d'augmenter la vitesse de détection/correction. Pour ces architectures, la valeur C dans l'équation (1) est égale à 32 pour les codes de parité et à 4 pour les codes SEC-DED. Pour les architectures 64 bits, la valeur de C est doublée. Les opérations de décalage $>>\log_2 C$ peuvent être exécutées très rapidement à l'aide de multiplexeurs.

La variable OffSet comprend 'Address_Width - Page_Width' bits, où Address_Width représente le nombre de bits d'adressage d'un mot de mémoire, et Page_Width représente le nombre de bits d'adressage d'une page de mémoire. La variable Masque comprend 'Address_Width - Page_Width - min($\log_2$C)' bits, où la fonction min($\log_2$C) donne le minimum du 'logC' pour tous les codes de détection/correction d'erreurs qui sont prévus.

Les paramètres OffSet et Masque comprennent chacun deux champs de bits: offset_1, offset_2, masque_1 et masque_2. Les champs offset_2 et masque_2 ont la même taille et comprennent les bits de poids fort appartenant aux paramètres Offset et Masque. Tous les bits des champs offset_2 et masque_1 sont mis à '0' logique, tandis que tous les bits du champ masque_2 sont mis à '1' logique.

Seul le champ offset_1 donne l'adresse de la page ou du segment avec les bits de vérification. Le rôle des autres champs est de permettre au champ offset_1 d'avoir une taille variable.

Dans un mot de vérification, la position des bits de vérification (@check_bits) correspondant à un mot de données est donnée par l'équation suivante:

$$@\text{check\_bits} = @\text{data\_word} \% C \qquad (2)$$

Une expression de la forme 'a%b' représente le reste d'une division arithmétique entre les opérateurs 'a' et 'b'. Comme C est une puissance de 2, on exécute l'opération "@data_word%C" en choisissant les $n = \log_2 C$ bits de poids faible appartenant à "@data_word". Les autres notations utilisées dans l'équation (2) ont le même sens que dans le cas de l'équation (1).

Les paramètres OffSet et Masque et les bits utilisés pour l'identification du procédé de détection/correction d'erreur peuvent être stockés dans des registres d'états dans le dispositif RSM. Un (ou plusieurs) registre(s) doit (doivent) être reprogrammé(s) chaque fois que le niveau de protection pour les accès de mémoires est changé. On peut exécuter cette reconfiguration comme une opération de stockage de mémoire en associant une adresse de mémoire à chaque registre d'état.

Il n'est pas nécessaire de reconfigurer les registres d'état du dispositif RSM chaque fois qu'on change le niveau de protection des accès de mémoire, si on limite l'utilisation de chaque procédé de détection/correction d'erreur à un espace d'adresse fixe. Dans ce cas, le niveau de protection de chaque accès de mémoire peut être identifié de la même manière que le mécanisme de détection utilisé dans une unité de protection de mémoire (MPU). Si on suppose que chaque région de l'espace d'adressage qui requiert un niveau de protection prédéfinie est identifiée par une combinaison des $(n-p)$ bits de poids fort $a_{n-1}a_{n-2}\cdots a_{n-p}$, l'appartenance d'une adresse de mémoire $x_{n-1}x_{n-2}...x_{n-p}...x_0$ à une région prédéfinie de protection est donnée par l'équation ci-dessous

$$\left[(a_{n-1}\overline{\oplus}x_{n-1})\vee mask_{n-1}\right]\wedge\left[(a_{n-2}\overline{\oplus}x_{n-2})\vee mask_{n-2}\right]\wedge\cdots\wedge\left[(a_{n-p}\overline{\oplus}x_{n-p})\vee mask_{n-p}\right] \qquad (3)$$

Le symbole $\overline{\oplus}$ représente l'opération logique *'non ou exclusive',* et les symboles '$\vee$' et '$\wedge$' ont la même signification que dans l'équation (1). Le masque $mask_{n-1},...,mask_{n-p}$ est utilisé pour permettre des régions de protection ayant des dimensions variables. A ces fins, les bits de masque sont divisés dans deux champs de taille variable, de telle manière que les bits de poids forte sont mis à un '0' logique et les de poids faible sont mis à un '1' logique: $mask_{n-1}=0,...,mask_{n-q}=0$ and $mask_{n-q-1}=1,...,mask_{n-p}=1$ $(1<q\leq p)$.

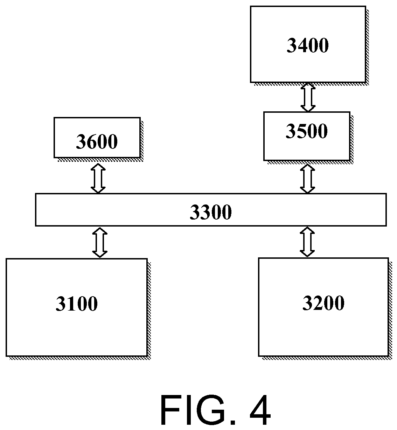

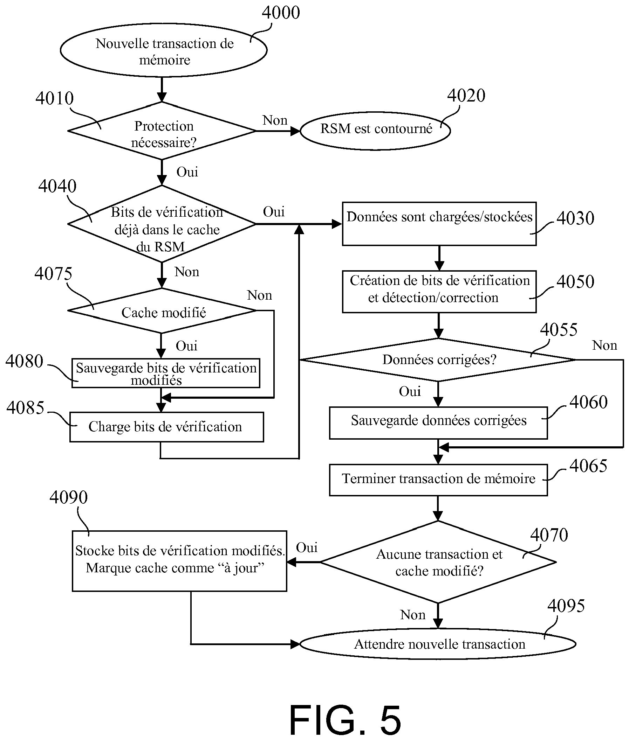

Dans le cas d'un sous-système d'interconnexion basé sur un bus, qui permet seulement des accès séquentiels, un second mode de réalisation schématisé dans la figure 4, dans laquelle le dispositif RSM est intégré dans un module maître du bus, permet de réduire l'impact sur la performance par rapport au schéma présenté en figure 2. Cela est dû à la relaxation des exigences de synchronisation entre les transactions de mémoire qui se suivent. En plus, dans le cas d'une nouvelle transaction de mémoire, quand des nouveaux bits de vérification sont demandés, il est possible de réaliser une meilleure construction des salves d'accès (« burst ») sur le bus en récupérant les bits de vérification avant de récupérer les données. Un organigramme de ce procédé de protection basé sur un tel dispositif RSM est schématisé dans la figure 5.

La figure 4 illustre schématiquement un dispositif RSM 3500 intégré dans un module maître d'un sous-système d'interconnexion basé sur un bus, selon un second mode de réalisation de l'invention. Ce mode de réalisation comprend un ordinateur 3400 et deux mémoires 3200, 3100 connectées par un sous-système l'interconnexion 3300. Un module arbitre 3600 du bus est, au contraire du premier mode de réalisation de la figure 2, directement connecté à l'interconnexion 3300. Le dispositif RSM 3500 selon l'invention est intégré dans le module maître du bus. Ce second mode de réalisation selon la figure 4 protège une plus grande partie du sous-système d'interconnexion que le premier mode de réalisation montré dans la figure 2.

La figure 5 illustre un procédé pour utiliser le second mode de réalisation selon la figure 4. Ici, on considère toujours la protection des opérations de lecture sur des mémoires RAM, et des opérations de lecture sur des mémoires ROM. Dans une étape 4000, une nouvelle transaction de mémoire commence. Dans une étape 4010, le dispositif RSM 3500 contrôle si une protection est nécessaire. Si une protection n'est pas nécessaire, le dispositif RSM 3500 est contourné et on passe à une étape 4020. Si une protection est nécessaire, on passe à une étape 4040, dans laquelle le dispositif RSM 3500 contrôle si les bits de vérification correspondant aux données transférées existent déjà dans la mémoire cache du dispositif RSM 3500. Si ces bits de vérification sont déjà présents dans la mémoire cache du dispositif RSM 3500, on passe à une étape 4030, dans laquelle des données sont chargées/stockées de/dans une mémoire 3100, 3200. On passe de l'étape 4040 à l'étape 4075, dans laquelle le dispositif RSM 3500 contrôle si les bits de vérification du cache du dispositif RSM 3500 ont été modifiés. Si la mémoire cache du dispositif RSM 3500 a été modifiée, on passe à une étape 4080, dans laquelle les bits de vérification modifiés sont stockés dans la mémoire 3100, 3200. Ensuite, on passe à l'étape 4085, dans laquelle les bits de vérification nécessaires sont chargés depuis la mémoire 3100, 3200. Ensuite, on passe à l'étape 4030, dans laquelle des données sont chargées/stockées de/dans la mémoire 3100, 3200. Ensuite, on passe à une étape 4050 dans laquelle le dispositif RSM 3500 génère à nouveau les bits de vérification correspondant aux données transférées et détecte et/ou corrige les éventuelles erreurs présentes dans ces données. Par la suite, on passe à une étape 4055, où le dispositif RSM contrôle si les données ont été corrigées. Si les données n'ont pas été corrigées, on passe à une étape 4065. Si les données ont été corrigées, on passe à une étape 4060, dans laquelle les données corrigées sont sauvegardées dans la mémoire 3100, 3200. Après, on passe à l'étape 4065, dans laquelle la transaction de mémoire est terminée. On passe ensuite à une étape 4070, dans laquelle le dispositif RSM 3500 contrôle s'il n'y a aucune nouvelle transaction de mémoire et si la mémoire cache du dispositif RSM 3500 a été modifiée. Si la réponse est non, on passe à une étape 2095, autrement, on passe à une étape 2090, dans laquelle le dispositif RSM stocke les bits de vérification modifiés dans la mémoire 3100, 3200. La mémoire cache du dispositif RSM 3500 est marquée comme à jour. Ensuite, on passe à l'étape 4095, dans laquelle le dispositif RSM 3500 attend une nouvelle transaction de mémoire.

Des versions simplifiées du dispositif RSM peuvent être obtenues en découplant les deux parties suivantes:

a) la gestion du trafic des bits de vérification entre le module maître et les mémoires, et
b) la détection/correction des erreurs.

Dans les organigrammes présentés sur les figures 3 et 5, la réalisation de ces versions simplifiées demande seulement l'élimination des étapes qui effectuent la génération des bits de vérification et la détection/correction des erreurs. Cela revient à éliminer les étapes 2050, 2055 et 2060 dans la figure 3 et les étapes 4050, 4055, 4060 dans la figure 5. La génération des bits de vérification et implicitement la détection/correction des erreurs peuvent être effectuées par un contrôleur standard inclus dans le module maître.

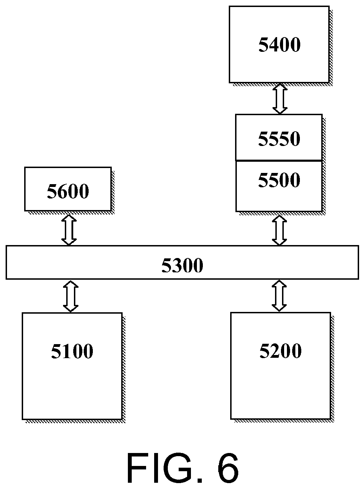

La figure 6 illustre schématiquement un troisième mode de réalisation du système de l'invention comprenant un dispositif RSM 5500, dans le cas où une unité de gestion mémoire (MMU : « Memory Management Unit ») 5500 est déjà présente dans un système de calcul. Ici, le dispositif RSM 5500 est connecté à l'unité MMU 5550. L'unité MMU 5550 est connectée à un microprocesseur 5400. Le dispositif RSM 5500, un module arbitre 5600 et deux mémoires 5100, 5200 sont connectés à un sous-système d'interconnexion 5300. Les adresses de page pour les bits de vérification (OffSet) et l'identification du procédé de détection/correction d'erreurs sont fournies par l'unité MMU 5550. Ceci permet une flexibilité et une granularité maximale du partitionnement de la mémoire dans différentes zones de protection. Pour chaque page, n'importe quel niveau de protection peut être choisi indépendamment des pages voisines et les bits de vérification peuvent être placés n'importe où dans l'espace physique d'adressage. Dans ce cas, le niveau le plus bas de la table de translation utilisée par l'unité MMU a besoin d'être augmenté avec des informations concernant les niveaux de protection et les adresses de pages avec des bits de vérification.

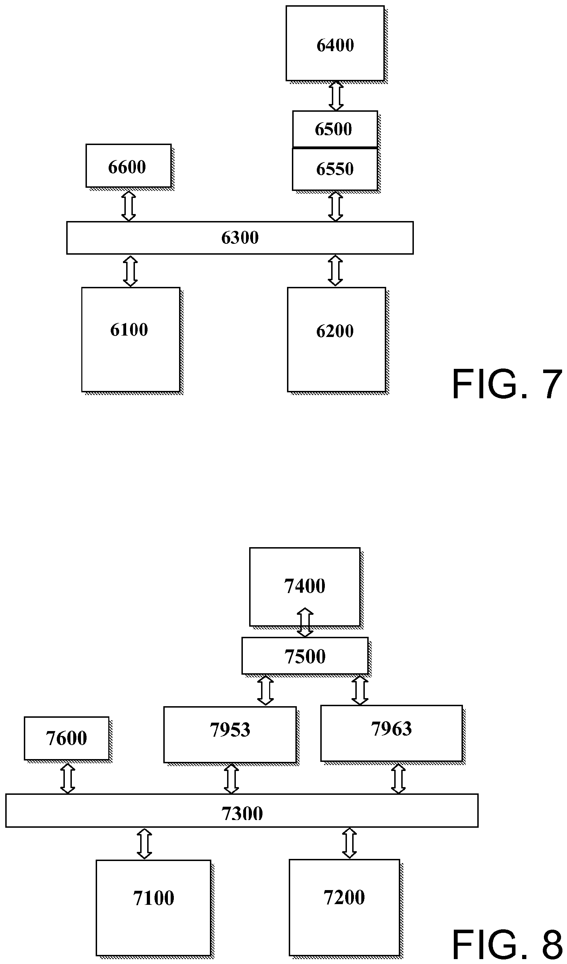

La figure 7 illustre un quatrième mode de réalisation du système de l'invention, selon lequel deux mémoires 6100, 6200, un module arbitre 6600 et une unité MMU 6550 sont directement connectés à un sous-système d'interconnexion 6300. Un dispositif RSM 6500 est connecté entre l'unité MMU 6550 et un module arbitre (e.g. microprocesseur) 6400. Ce mode de réalisation produit les mêmes avantages que le troisième mode de réalisation illustré dans la figure 6, sans qu'on ait besoin de modifier l'unité MMU 6550 ou augmenter la table de translation. Dans le but de protéger les accès de mémoire générés par l'unité MMU 6550, dans le cas d'un défaut de mémoire cache (« cache miss ») dans le tampon de traduction anticipée (TLB : « Translation Look-aside Buffer »), on peut simplement connecter une version simplifiée d'un dispositif RSM au sous-système d'interconnexion. Cette version du dispositif RSM doit offrir un seul type de protection et cet aspect peut être utilisé pour minimiser le coût de la mise en oeuvre.

La figure 8 illustre un cinquième mode de réalisation du système de l'invention avec un dispositif RSM selon l'invention. Deux mémoires 7100, 7200 et un module arbitre 7600 sont directement connectés à un sous-système d'interconnexion 7300. Une mémoire cache pour les bits de données 7953 et une mémoire cache pour les bits de vérification 7963 sont relié à un module arbitre (e.g. microprocesseur) 7400 et aux mémoires principales 7100, 7200 à travers le sous-système d'interconnexion 7300. Une caractéristique essentielle de cette configuration est l'accès parallèle aux bits donnés et aux bits de vérification. La mémoire cache 7953 peut comprendre des instructions et/ou des variables. L'accès parallèle aux bits de données et aux bits de vérification est tel que dans le cas d'un succès dans la mémoire cache (« cache hit »), il n'y a pas de pénalité en performance par rapport a une mémoire cache classique disposant d'un mécanisme embarqué (« embedded ») pour la détection/correction des erreurs. Le protocole utilisé garantit qu'un succès dans la mémoire cache (« cache hit ») comprenant les bits d'information utile est toujours suivi par un succès dans la mémoire cache comprenant les bits de vérification. Dans le cas d'un défaut de mémoire cache (« cache miss »), dans les deux mémoires cache, les accès à la mémoire principale sont séquentiels. Puisque les données sont vérifiées seulement une fois au niveau de la mémoire cache, le surcoût en performance pour le procédé de protection est réduit au minimum. Une augmentation de la performance peut à la rigueur être réalisée. Ce cinquième mode de réalisation réalise une protection implicite des sous-systèmes d'interconnexion et des mémoires principales et/ou non-volatiles.

Il est possible de réaliser une combinaison des modes de réalisation des figures 6 et 7 dans le but d'utiliser les avantages des deux modes de réalisation.

Un homme du métier comprend que la fonction du dispositif RSM selon l'invention aussi peut être réalisée comme un programme logiciel.

Un homme du métier comprend qu'un mode de réalisation selon l'invention peut comprendre une seule mémoire, ou plus de deux mémoires.

REFERENCES

[1] "Self-Checking and Fault-Tolerant Design" de P.K Lala (San Francisco, CA: Morgan Kaufmann, 2001).

[2] "The theory of error-correcting codes" de F.J. MacWilliams, N.J.A. Sloane (New York, NY: North-Holland, 1977).

[3] "A System Level Approach for Embedded Memory Robustness" de R. Mariani, G. Boschi (Solid-State Electronics 49, 2005, pp. 1791-1798).

[4] "Method and apparatus for implementing error correction coding in a random access memory" http://www.freshpatents.com/Method-and-apparatus-for-implementing-error-correction-coding-in-a-random-access-memory-dt20070405ptan20070079217.php

[5] "Le système SACEM" http://www.metro-pole.net/expl/sacem/ch04.htm

**Revendications**

1. Dispositif électronique de service de fiabilité associé à au moins un sous-système d'interconnexion et de stockage de données pour garantir la protection de ce sous-système contre des erreurs transitoires et contre des erreurs permanentes, comprenant des moyens d'adressage, de transport et de stockage de bits de vérification permettant de réaliser l'adressage, le transport et le stockage de ces bits de la même manière que des moyens d'adressage, de transport et de stockage de bits de données d'information utile, en ce que le matériel utilisé pour stocker les bits de vérification est utilisé pour stocker lesdites données, ledit dispositif électronique étant **caractérisé en ce qu'**il comprend une mémoire cache (8700) dans laquelle chaque mot de mémoire contient des groupes de bits de vérification correspondant aux desdites données d'information utile, et un registre d'étiquette (8500) stockant les adresses correspondant à ces bits de vérification, de manière à identifier sans ambigüité les mots desdites données d'information utile associés à chacun des groupes de bits de vérification.

2. Dispositif selon la revendication 1, dans lequel on associe l'adresse des mots desdites données d'information utile avec l'adresse du mot contenant les bits de vérification correspondants selon l'équation suivante :

$$@\text{check\_word} = \textit{OffSet} \vee \{[\textit{Mask} \wedge \text{data\_word}] \gg \log_2 \text{C}\}$$

dans laquelle :

OffSet et Masque sont des paramètres stockés dans un registre d'état,
$\vee$ représente l'opération logique « ou »,
$\wedge$ représente l'opération logique « et »,
$\gg$ x représente un décalage de données de x bits vers la droite, et
C est le nombre de mots avec des bits d'information utile qui correspondent à un mot contenant des bits de vérification pour le code de détection/correction choisi.

3. Dispositif de service de fiabilité selon la revendication 1, qui comprend un registre d'état (8110), un registre de mémoire cache (8700), un registre d'étiquette (8500) et quatre registres additionnels (R1, R2, R3, R4), le second registre additionnel (R2) étant connecté à un troisième multiplexeur (MUX3), au registre d'étiquette (8500) et à un module de vérification (8950), le registre d'étiquette (8500) étant connecté au troisième multiplexeur (MUX3), au module de vérification (8950) et à un quatrième multiplexeur (MUX4), le premier registre additionnel (R1) étant connecté au module maître (1400, 3400, 5400, 6400, 7400) et à un second multiplexeur (MUX2), le module maître étant connecté au registre d'état (8110), un module de calcul (8800) étant connecté au troisième multiplexeur (MUX3), au quatrième multiplexeur (MUX4) et au registre d'état (8110), le quatrième multiplexeur (MUX4) étant connecté à une mémoire, le quatrième registre additionnel (R4) étant connecté à la mémoire (1100, 1200, 3100, 3200, 5100, 5200, 6100, 6200, 7100, 7200), à un premier module de correction (8601) et au second multiplexeur (MUX2), le premier module de correction (8601) étant connecté au module maître (1400, 3400, 5400, 6400, 7400) et au troisième registre additionnel (R3), un module de calcul (8900) étant connecté au second multiplexeur (MUX2), au registre de la mémoire cache (8700) et à un module de comparaison (8550), le module de comparaison (8550) étant connecté au registre de la mémoire cache (8700), au premier module de correction (8601) et à un second module de correction (8602), le second module de correction (8602) étant connecté au registre de la mémoire cache (8700), le registre de la mémoire cache (8700) étant connecté à la mémoire (1100, 1200, 3100, 3200, 5100, 5200, 6100, 6200, 7100, 7200) et au premier multiplexeur (MUX1), le premier multiplexeur (MUX1) étant connecté au troisième registre additionnel (R3) et à la mémoire (1100, 1200, 3100, 3200, 5100, 5200, 6100, 6200, 7100, 7200).

4.  Système électronique comprenant au moins un dispositif de service de fiabilité (1500, 3500, 5500, 6500, 7500) selon une quelconque des revendications 1 à 3, et :

    - au moins un module maître (1400, 3400, 5400, 6400, 7400) sur le sous-système d'interconnexion;
    - au moins un module esclave (1100, 1200, 3100, 3200, 5100, 5200, 6100, 6200, 7100, 7200) sur le sous-système d'interconnexion.

5.  Système selon la revendication 4, comprenant au moins deux modules maitres (1400, 3400, 5400, 6400, 7400) et un module arbitre (1600, 3600, 5600, 6600, 7600).

6.  Système selon une des revendications 4 ou 5, dans lequel le dispositif de service de fiabilité (1500) est connecté à un module arbitre (1600) sur le sous-système d'interconnexion (1300).

7.  Système selon une des revendications 4 ou 5, dans lequel le dispositif de service de fiabilité (3500) est connecté à un module maître (3400) sur le sous-système d'interconnexion (3300).

8.  Système selon une des revendications 4 ou 5, dans lequel le dispositif de service de fiabilité (5500) est connecté à une unité de gestion mémoire (MMU) (5550).

9.  Système selon une des revendications 4 ou 5, dans lequel le dispositif de service de fiabilité (6500) est connecté à un module maître (6400) et à une unité de gestion mémoire (6550).

10. Système selon une des revendications 4 ou 5, dans lequel le dispositif de service de fiabilité (7500) est connecté à un module maître (7400) et à une mémoire cache pour les bits d'information utile (7953) et à une seconde mémoire cache pour les bits de vérification (7963), de manière à ce que le dispositif de service de fiabilité ait un accès parallèle aux bits d'information utile et aux bits de vérification.

11. Système selon une des revendications 4 à 10, dans lequel le module maître est un microprocesseur, une mémoire cache, un DMA, ou une passerelle de bus.

12. Procédé électronique de service de fiabilité pour garantir une protection contre des erreurs transitoires et des erreurs permanentes d'au moins un sous-système d'interconnexion et de stockage de données, mettant en oeuvre un dispositif électronique de service de fiabilité selon l'une quelconque des revendications 1 à 3, **caractérisé en ce que** l'on adresse, transporte et stocke les bits de vérification de la même manière que les bits d'information utile, et **en ce qu'**il comprend les étapes suivantes :

    A) une étape (2010) de vérification par un dispositif électronique de service de fiabilité (1500, 3500, 5500, 6500, 7500) de la nécessité d'une protection des accès,
    B) une étape (2020) de contournement du dispositif électronique de service de fiabilité, si cette protection n'est pas nécessaire,
    C) une étape (2030) de stockage dans une mémoire (1100, 1200) et une étape (2040) de vérification par le dispositif électronique de service de fiabilité (1500, 3500, 5500, 6500, 7500) de la présence dans la mémoire cache du dispositif de service de fiabilité des bits de vérification correspondant à l'information utile transférée,

K) une étape de contrôle (2075) par le dispositif électronique de service de fiabilité (1500) de la modification et, si nécessaire, de la sauvegarde dans la mémoire (1100, 1200) des bits modifiés présents dans la mémoire cache du dispositif de service de fiabilité (1500), quand le dispositif de service de fiabilité (1500) perçoit que les bits de vérification correspondant à l'information utile transférée ne sont pas présents dans sa mémoire cache.

**13.** Procédé selon la revendication 12, dans lequel les données sont chargées/stockées (2030) après l'étape (A) (2010) et avant l'étape (C) (2040).

**14.** Procédé selon la revendication 12 ou la revendication 13, qui comprend, en outre, les étapes suivantes :

- avant l'étape (K) :

D) une étape de création par le dispositif de service de fiabilité (1500) des nouveaux bits de vérification, et de comparaison des ces bits avec les bits déjà présents dans la mémoire cache du dispositif de service de fiabilité (1500, 3500, 5500, 6500, 7500), suivie d'une étape d'exécution par le dispositif de service de fiabilité (1500, 3500, 5500, 6500, 7500) d'opérations de détection/correction d'erreurs (2050),

E) une étape de contrôle (2055) par le dispositif de service de fiabilité (1500, 3500, 5500, 6500, 7500) de la correction des données utiles,

F) une étape de terminaison de la transaction de la mémoire (2065) quand les données utiles n'ont pas été corrigées,

G) une étape de sauvegarde dans la mémoire (2060), suivie d'une étape de terminaison de la transaction de la mémoire (2065), quand les bits d'information utile ont été corrigés,

H) une étape de contrôle par le dispositif de service de fiabilité (1500) de l'existence d'une nouvelle transaction de mémoire et de la modification du contenu de la mémoire cache du dispositif de service de fiabilité (1500, 2070),

I) une étape d'attente d'une nouvelle transaction par le dispositif de service de fiabilité (2095), quand le contenu de la mémoire cache n'a pas été modifié,

J) une étape de stockage des bits de vérification modifiés dans la mémoire, suivie d'une étape d'attente d'une nouvelle transaction par le dispositif de service de fiabilité (2095), et

- après l'étape (K) :

L) une étape de stockage des bits de vérification modifiés dans la mémoire (1100, 1200, 2080), suivie d'une étape de chargement des bits de vérification nécessaire depuis la mémoire (1100, 1200, 2085), et suivie de l'étape (D).

**15.** Procédé selon la revendication 14, dans lequel le stockage dans la mémoire des bits modifiés qui est effectué pendant les étapes (G) et (J) n'est pas réalisé en mode lecture.

**16.** Procédé selon la revendication 14 ou la revendication 15, dans lequel des données sont chargées/stockées (4030) après l'étape (C) (4040) et avant l'étape (D) (4050).

**17.** Produit de programme informatique lisible par microprocesseur comprenant des moyens formant un code de programme informatique pour mettre en oeuvre le procédé selon une quelconque des revendications 12 à 16.

**Patentansprüche**

**1.** Elektronische Zuverlässigkeitsfunktionsvorrichtung, die zumindest einem Untersystem zum Verbinden und Speichern von Daten zugeordnet ist, um den Schutz dieses Untersystems vor vorübergehenden Fehlern und vor dauerhaften Fehlern sicherzustellen, enthaltend:

- Mittel zum Adressieren, Transportieren und Speichern von Überprüfungsbits, welche die Adressierung, den Transport und die Speicherung dieser Bits ermöglichen, ebenso wie Mittel zum Adressieren, Transportieren und Speichern von Datenbits mit Nutzinformationen,

wobei die zum Speichern der Überprüfungsbits verwendete Hardware zum Speichern der Daten verwendet wird,

wobei die elektronische Vorrichtung **dadurch gekennzeichnet ist, dass** sie einen Cache-Speicher (8700) umfasst, in welchen jedes Speicherwort Gruppen von Überprüfungsbits enthält, die den Nutzinformationsdaten entsprechen, sowie ein Etikettenregister (8500), welches die diesen Überprüfungsbits entsprechenden Adressen speichert, so dass die jeder der Gruppen von Überprüfungsbits zugeordneten Wörter der Nutzinformationsdaten eindeutig identifiziert werden.

2. Vorrichtung nach Anspruch 1, wobei die Adresse der Wörter der Nutzinformationsdaten mit der Adresse des Worts verknüpft wird, das die entsprechenden Überprüfungsbits enthält, nach der folgenden Gleichung:

$$@\text{check\_word} = \mathit{OffSet} \vee \{[\mathit{Mask} \wedge \text{data\_word}] >> \log_2 C\}$$

worin

OffSet und Mask in einem Zustandsregister gespeicherte Parameter sind,
$\vee$ die logische Operation "oder" darstellt,
$\wedge$ die logische Operation "und" darstellt,
$>>x$ einen Datenversatz um x bits nach rechts darstellt, und
C die Anzahl an Wörtern mit Nutzinformationsbits ist, die einem Wort entsprechen, das Überprüfungsbits für den gewählten Erfassungs-/Korrekturcode enthält.

3. Zuverlässigkeitsfunktionsvorrichtung nach Anspruch 1, enthaltend ein Zustandsregister (8110), ein Cache-Speicher-Register (8700), ein Etikettenregister (8500) und vier Zusatzregister (R1, R2, R3, R4), wobei das zweite Zusatzregister (R2) mit einem dritten Multiplexer (MUX3), dem Etikettenregister (8500) und einem Überprüfungsmodul (8950) verbunden ist, wobei das Etikettenregister (8500) mit dem dritten Multiplexer (MUX3), dem Überprüfungsmodul (8950) und einem vierten Multiplexer (MUX4) verbunden ist, wobei das erste Zusatzregister (R1) mit dem Mastermodul (1400, 3400, 5400, 6400, 7400) und mit einem zweiten Multiplexer (MUX2) verbunden ist, wobei das Mastermodul mit dem Zustandsregister (8110) verbunden ist, wobei ein Rechenmodul (8800) mit dem dritten Multiplexer (MUX3), dem vierten Multiplexer (MUX4) und dem Zustandsregister (8110) verbunden ist, wobei der vierte Multiplexer (MUX4) mit einem Speicher verbunden ist, wobei das vierte Zusatzregister (R4) mit dem Speicher (1100, 1200, 3100, 3200, 5100, 5200, 6100, 7100, 7200), einem ersten Korrekturmodul (8601) und dem zweiten Multiplexer (MUX2) verbunden ist, wobei das erste Korrekturmodul (8601) mit dem Mastermodul (1409, 3400, 5400, 6400, 7400) und mit dem dritten Zusatzregister (R3) verbunden ist, wobei ein Rechenmodul (8900) mit dem zweiten Multiplexer (MUX2), dem Register des Cache-Speichers (8700) und mit einem Komparator-Modul (8550) verbunden ist, wobei das Komparator-Modul (8550) mit dem Register des Cache-Speichers (8700), dem ersten Korrekturmodul (8601) und einem zweiten Korrekturmodul (8602) verbunden ist, wobei das zweite Korrekturmodul (8602) mit dem Register des Cache-Speichers (8700) verbunden ist, wobei das Register des Cache-Speichers (8700) mit dem Speicher (1100, 1200, 3100, 3200, 5100, 5200, 6100, 6200, 7100, 7200) und mit dem ersten Multiplexer (MUX1) verbunden ist, und wobei der erste Multiplexer (MUX1) mit dem dritten Zusatzregister (R3) und mit dem Speicher (1100, 1200, 3100, 3200, 5100, 6100, 6200, 7100, 7200) verbunden ist.

4. Elektronisches System mit zumindest einer Zuverlässigkeitsfunktionsvorrichtung (1500, 3500, 5500, 6500, 7500) nach einem der Ansprüche 1 bis 3, und:

- mit zumindest einem Mastermodul (1400, 3400, 5400, 6400, 7400) an dem Verbindungsuntersystem,
- mit zumindest einem Slavemodul (1100, 1200, 3100, 3200, 5100, 5200, 6100, 6200, 7100, 7200) an dem Verbindungsuntersystem.

5. System nach Anspruch 4, enthaltend zumindest zwei Mastermodule (1400, 3400, 5400, 6400, 7400) und ein Entscheidungsmodul (1600, 3600, 5600, 6600, 7600).

6. System nach einem der Ansprüche 4 oder 5, wobei die Zuverlässigkeitsfunktionsvorrichtung (1500) mit einem Entscheidungsmodul (1600) an dem Verbindungsuntersystem (1300) verbunden ist.

7. System nach einem der Ansprüche 4 oder 5, wobei die Zuverlässigkeitsfunktionsvorrichtung (3500) mit einem Mastermodul (3400) an dem Verbindungsuntersystem (3300) verbunden ist.

8. System nach einem der Ansprüche 4 oder 5, wobei die Zuverlässigkeitsfunktionsvorrichtung (5500) mit einer Speicherverwaltungseinheit (MMU) (5500) verbunden ist.

9. System nach einem der Ansprüche 4 oder 5, wobei die Zuverlässigkeitsfunktionsvorrichtung (6500) mit einem Mastermodul (6400) und einer Speicherverwaltungseinheit (6500) verbunden ist.

10. System nach einem der Ansprüche 4 oder 5, wobei die Zuverlässigkeitsfunktionsvorrichtung (7500) mit einem Mastermodul (7400) und mit einem Cache-Speicher für die Nutzinformationsbits (7935) und mit einem zweiten Cache-Speicher für die Überprüfungsbits (7963) verbunden ist, so dass die Zuverlässigkeitsfunktionsvorrichtung parallelen Zugriff auf die Nutzinformationsbits und auf die Überprüfungsbits hat.

11. System nach einem der Ansprüche 4 bis 10, wobei das Mastermodul ein Mikroprozessor, ein Cache-Speicher, ein DMA oder ein Bus-Gateway ist.

12. Elektronisches Verfahren mit Zuverlässigkeitsfunktion zum Sicherstellen von einem Schutz vor vorübergehenden Fehlern und vor dauerhaften Fehlern für zumindest ein Untersystem zum Verbinden und Speichern von Daten, das eine elektronische Zuverlässigkeitsfunktionsvorrichtung nach einem der Ansprüche 1 bis 3 einsetzt, **dadurch gekennzeichnet, dass** die Überprüfungsbits auf gleiche Art und Weise wie die Nutzinformationsbits adressiert, transportiert und gespeichert werden, und dass es die nachfolgenden Schritte umfasst:

A) einen Schritt (2010) des Überprüfens der Notwendigkeit eines Schutzes vor Zugriffen durch eine elektronische Zuverlässigkeitsfunktionsvorrichtung (1500, 3500, 5500, 6500, 7500),
B) einen Schritt (2020) des Umgehens der elektronischen Zuverlässigkeitsfunktionsvorrichtung dann, wenn dieser Schutz nicht notwendig ist,
C) einen Schritt (2030) des Speicherns in einem Speicher (1100, 1200) und einen Schritt (2040) des Überprüfens des Vorhandenseins von der übertragenen Nutzinformation entsprechenden Überprüfungsbits in dem Cache-Speicher der Zuverlässigkeitsfunktionsvorrichtung durch die elektronische Zuverlässigkeitsfunktionsvorrichtung (1500, 3500, 5500, 6500, 7500),
K) einen Schritt (2075) der Überwachung der Änderung und, falls erforderlich, der Hinterlegung in dem Speicher (1100, 1200) von in dem Cache-Speicher der Zuverlässigkeitsfunktionsvorrichtung (1500) vorhandenen, geänderten Bits durch die elektronische Zuverlässigkeitsfunktionsvorrichtung (1500), wenn die Zuverlässigkeitsfunktionsvorrichtung (1500) bemerkt, dass die der übertragenen Nutzinformation entsprechenden Überprüfungsbits nicht in ihrem Cache-Speicher vorhanden sind.

13. Verfahren nach Anspruch 12, wobei die Daten nach dem Schritt (A) (2010) und vor dem Schritt (C) (2040) geladen/gespeichert (2030) werden.

14. Verfahren nach Anspruch 12 oder Anspruch 13, das ferner nachstehende Schritte umfasst:

- vor Schritt (K);

D) einen Schritt des Erzeugens von neuen Überprüfungsbits durch die Zuverlässigkeitsfunktionsvorrichtung (1500) sowie des Vergleichens dieser Bits mit den bereits in dem Cache-Speicher der Zuverlässigkeitsfunktionsvorrichtung (1500, 3500, 5500, 6500, 7500) vorhandenen Bits, gefolgt von einem Schritt des Ausführens von Fehler-Erfassungs-/Korrekturvorgängen (2050) durch die Zuverlässigkeitsfunktionsvorrichtung (1500, 3500, 5500, 6500, 7500),
E) einen Schritt des Überwachens (2055) der Korrektur von Nutzdaten durch die Zuverlässigkeitsfunktionsvorrichtung (1500, 3500, 5500, 6500, 7500),
F) einen Schritt des Abschließens der Transaktion des Speichers (2065), wenn die Nutzdaten nicht korrigiert wurden,
G) einen Schritt der Hinterlegung in dem Speicher (2060), gefolgt von einem Schritt des Abschließens der Transaktion des Speichers (2065), wenn die Nutzinformationsbits korrigiert wurden,
H) einen Schritt des Überwachens einer bestehenden erneuten Speichertransaktion und der Änderung des Inhalts in dem Cache-Speicher der Zuverlässigkeitsfunktionsvorrichtung (1500, 2070),
I) einen Schritt des Abwartens einer neuen Transkation durch die Zuverlässigkeitsfunktionsvorrichtung (2095), wenn der Inhalt des Cache-Speichers nicht geändert wurde,
J) einen Schritt des Speicherns von geänderten Überprüfungsbits in dem Speicher, gefolgt von einem Schritt des Abwartens einer neuen Transkation durch die Zuverlässigkeitsfunktionsvorrichtung (2095), und

- nach Schritt (K):

L) einen Schritt des Speicherns von geänderten Überprüfungsbits in dem Speicher (1100, 1200, 2080), gefolgt von einem erforderlichen Schritt des Ladens der Überprüfungsbits aus dem Speicher (1100, 1200, 2085) und gefolgt von Schritt (D).

**15.** Verfahren nach Anspruch 14, wobei das Speichern der geänderten Bits in dem Speicher, das während der Schritte (G) und (J) erfolgt, nicht im Lesemodus erfolgt.

**16.** Verfahren nach Anspruch 14 oder Anspruch 15, wobei nach Schritt (C) (4040) und vor Schritt (D) (4050) Daten geladen/gespeichert werden.

**17.** Computerprogrammprodukt, das von einem Mikroprozessor lesbar ist und Mittel zum Bilden eines Computerprogrammcodes zum Durchführen des Verfahrens nach einem der Ansprüche 12 bis 16 enthält.

**Claims**

**1.** A reliability service electronic device associated with at least one data interconnecting and storing subsystem to ensure protection of this subsystem against transient errors and against permanent errors, comprising means for addressing, transporting and storing check bits for addressing, transporting and storing these bits in the same way as means for addressing, transporting and storing payload data bits, wherein the hardware used to store the check bits is used to store said data, said electronic device being **characterised in that** it comprises a cache memory (8700) in which each memory word contains groups of check bits corresponding to said payload data, and a label register (8500) storing the addresses corresponding to these check bits, so as to unambiguously identify the words of said payload data associated with each of the groups of check bits.

**2.** The device according to claim 1, wherein the address of the words of said payload data is associated with the address of the word containing the corresponding check bits according to the following equation:

$$@\text{check\_word} = \textit{OffSet} \vee \{[\textit{Mask} \wedge \text{data\_word}] >> \log_2 \text{C}\}$$

in which:

Offset and Mask are parameters stored in the status register,
$\vee$ represents the "OR" logic operation,
$\wedge$ represents the "AND" logic operation,
$>>x$ represents a x-bit data offset to the right, and
C is the word number with the payload bits which correspond to a word containing check bits for the selected detecting/correcting code.

**3.** The reliability service device according to claim 1, which comprises a status register (8110), a cache memory register (8700), a label register (8500) and four additional registers (R1, R2, R3, R4), the second additional register (R2) being connected to a third multiplexer (MUX3), to the label register (8500) and to a check module (8950), the label register (8500) being connected to the third multiplexer (MUX3), to the check module (8950) and to a fourth multiplexer (MUX4), the first additional register (R1) being connected to a master module (1400, 3400, 5400, 6400, 7400) and to a second multiplexer (MUX2), the master module being connected to the status register (8110), a calculation module (8800) being connected to the third multiplexer (MUX3), to the fourth multiplexer (MUX4) and to the status register (8110), the fourth multiplexer (MUX4) being connected to a memory, the fourth additional register (R4) being connected to the memory (1100, 1200, 3100, 3200, 5100, 5200, 6100, 6200, 7100, 7200), to a first correction module (8601) and to the second multiplexer (MUX2), the first correction module (8601) being connected to the master module (1400, 3400, 5400, 6400, 7400) and to the third additional register (R3), a calculation module (8900) being connected to the second multiplexer (MUX2), to the cache memory register (8700) and to a comparison module (8550), the comparison module (8550) being connected to the cache memory register (8700), to the first correction module (8601) and to a second correction module (8602), the second correction module (8602) being connected to the cache memory register (8700), the cache memory register (8700) being connected to the memory (1100, 1200, 3100, 3200, 5100, 5200, 6100, 6200, 7100, 7200) and to the first multiplexer (MUX1), the first multiplexer (MUX1) being connected to the third additional register (R3) and to the memory (1100, 1200, 3100, 3200, 5100, 5200, 6100, 6200, 7100, 7200).

4. An electronic system comprising at least one reliability service device (1500, 3500, 5500, 6500, 7500) according to any of claims 1 to 3, and:

   - at least one master module (1400, 3400, 5400, 6400, 7400) on the interconnecting subsystem;
   - at least one slave module (1100, 1200, 3100, 3200, 5100, 5200, 6100, 6200, 7100, 7200) on the interconnecting subsystem.

5. The system according to claim 4, comprising at least two master modules (1400, 3400, 5400, 6400, 7400) and an arbitrator module (1600, 3600, 5600, 6600, 7600) .

6. The system according to one of claims 4 or 5, wherein the reliability service device (1500) is connected to an arbitrator module (1600) on the interconnecting subsystem (1300).

7. The system according to one of claims 4 or 5, wherein the reliability service device (3500) is connected to a master module (3400) on the interconnecting subsystem (3300).

8. The system according to one of claims 4 or 5, wherein the reliability service device (5500) is connected to a memory management unit (MMU) (5550).

9. The system according to one of claims 4 or 5, wherein the reliability service device (6500) is connected to a master module (6400) and to a memory management unit (6550).

10. The system according to one of claims 4 or 5, wherein the reliability service device (7500) is connected to a master module (7400) and to a cache memory for the payload bits (7953) and to a second cache memory for the check bits (7963), such that the reliability service device has a parallel access to the payload bits and to the check bits.

11. The system according to one of claims 4 to 10, wherein the master module is a microprocessor, a cache memory, a DMA, or a bus gateway.

12. A reliability service electronic method to ensure protection against transient errors and permanent errors of at least one data interconnecting and storing subsystem, implementing a reliability service electronic device according to any of claim 1 to 3,
   **characterised in that** the check bits are addressed, transported and stored in the same way as the payload bits, and **in that** it comprises the following steps:

   A) a step (2010) of checking by a reliability service electronic device (1500, 3500, 5500, 6500, 7500) the necessity of an access protection,
   B) a step (2020) of bypassing the reliability service electronic device, if this protection is not necessary,
   C) a step (2030) of storing in a memory (1100, 1200) and a step (2040) of checking by the reliability service electronic device (1500, 3500, 5500, 6500, 7500) the presence in the cache memory of the reliability service device of the check bits corresponding to the transferred payload,
   K) a step of monitoring (2075), by the reliability service electronic device (1500) the modification, and, if necessary, the saving in the memory (1100, 1200) of the modified bits present in the cache memory of the reliability service device (1500), when the reliability service device (1500) perceives that the check bits corresponding to the transferred payload are not present in its cache memory.

13. The method according to claim 12, wherein the data are loaded/stored (2030) after step (A) (2010) and before step (C) (2040).

14. The method according to claim 12 or claim 13, which further comprises, the following steps:

   - before step (K) :

      D) a step of creating by the reliability service device (1500) new check bits, and comparing these bits with the bits already present in the cache memory of the reliability service device (1500, 3500, 5500, 6500, 7500), followed by a step of executing by the reliability service device (1500, 3500, 5500, 6500, 7500) error detection/correction operations (2050),

E) a step of monitoring (2055) by the reliability service device (1500, 3500, 5500, 6500, 7500) the correction of the payload data,

F) a step of terminating the transaction of the memory (2065) when the payload data have not been corrected,

G) a step of saving in the memory (2060), followed by a step of terminating the transaction of the memory (2065), when the payload bits have been corrected,

H) a step of monitoring by the reliability service device (1500) the existence of a new memory transaction and modifying the content of the cache memory of the reliability service device (1500, 2070),

I) a step of waiting for a new transaction by the reliability service device (2095), when the content of the cache memory has not been modified,

J) a step of storing the check bits modified in the memory, followed by a step of waiting for a new transaction by the reliability service device (2095), and

- after step (K) :

L) a step of storing the check bits modified in the memory (1100, 1200, 2080), followed by a step of loading the check bits necessary from the memory (1100, 1200, 2085), and followed by step (D).

15. The method according to claim 14, wherein storing in the memory the modified bits which is performed during steps (G) and (J) is not made in read mode.

16. The method according to claim 14 or claim 15, wherein the data are loaded/stored (4030) after step (C) (4040) and before step (D) (4050).

17. A computer program product readable by a microprocessor comprising computer program code forming means for implementing the method according to any of claims 12 to 16.

FIG. 1

FIG. 2

2000

Nouvelle transaction de mémoire

2010

Protection
nécessaire? → Non → RSM est contourné

2020

Oui

2030

Les données sont
chargées/stockées

2040

Bits de
vérification déja dans
le cache du RSM → Oui

Non

2075

Cache du RSM
modifié ? → Non

Oui

2080

Sauvegarde bits de vérification
modifiés dans la mémoire

2085

Charge bits de vérification
de la mémoire

2090

Stocke bits de vérification modifiés
dans la mémoire. Marque cache
du RSM comme "à jour"

2050

Création de bits
de vérification

2055

Données corrigées? → Non

Oui

2060

Sauvegarde données corrigées dans
la mémoire

2065

Terminer transaction de mémoire

2070

Aucune transaction
et cache du RSM modifié? ← Oui

Non

2095

Attendre nouvelle transaction

# FIG. 3

FIG. 4

4000

Nouvelle transaction de
mémoire

4010

Protection
nécessaire? —Non→ RSM est contourné

4020

Oui

4040

Bits de vérification
déjà dans le cache
du RSM —Oui→ Données sont chargées/stockées

4030

Non

4075

Cache modifié —Non→

Oui

4080

Sauvegarde bits de vérification
modifiés

4085

Charge bits de vérification

Création de bits de vérification
et détection/correction

4050

4055

Données corrigées? —Non→

Non

Oui

4060

Sauvegarde données corrigées

Terminer transaction de mémoire

4065

4090

Stocke bits de vérification modifiés.
Marque cache comme "à jour" ←Oui— Aucune transaction et
cache modifié?

4070

Non

4095

Attendre nouvelle transaction

FIG. 5

FIG. 6

6400

6500

6550

6600

6300

6100

6200

FIG. 7

7400

7500

7600

7953

7963

7300

7100

7200

FIG. 8

EP 2 223 216 B1

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20020199151 A1

**Littérature non-brevet citée dans la description**

- **F.J. MACWILLIAMS.** The theory of error-correcting codes. N.J.A. Sloane, 1977
- **R. MARIANI ; G. BOSCHI.** A System Level Approach for Embedded Memory Robustness. *Solid-State Electronics,* 2005, vol. 49, 1791-1798
- *Method and apparatus for implementing error correction coding in a random access memory, http://www.freshpatents.com/Method-and-apparatus-for-implementing-error-correction-coding-in-a-random-access-memory-dt20070405ptan20070079217.php*
- *Le système SACEM, http://www.metro-pole.net/expl/sacem/ch04.htm*